# EUROPÄISCHE PATENTANMELDUNG

(11) **EP 2 523 296 A1**
(43) Veröffentlichungstag der Anmeldung: **14.11.2012**
(21) Anmeldenummer: 11165631.0
(22) Anmeldetag: 11.05.2011
(51) Int. Cl.: H02H 9/04

(54) **Schaltungsanordnung zum Bereitstellen eines Überspannungsschutzes und Verfahren zu deren Betrieb**

(71) Anmelder: SIEMENS AKTIENGESELLSCHAFT, 80333 München (DE)
(72) Erfinder: Dillig, Reinhold, 96117, Memmelsdorf (DE); Herrmann, Bernd, 91074, Herzogenaurach (DE); Lorz, Roland, 91341, Röttenbach (DE); Roppelt, Bernd, 96191, Viereth-Trunstadt (DE); Schierling, Hubert, 91052, Erlangen (DE); Schwinn, Thomas, 91074, Herzogenaurach (DE)

(57) **Zusammenfassung**

Bei elektrischen Schaltungen kann es vorkommen, dass eine Versorgungsspannung (U) einen unregelmäßigen zeitlichen Verlauf aufweist und hierbei auch ein Spannungswert auftritt, der größer als ein kritischer Spannungswert ist, bei welchem ein Bauteil der Schaltung beschädigt wird. Es ist Aufgabe der vorliegenden Erfindung, für eine elektrische Schaltung einen robusten und dennoch zuverlässigen Schutz vor einer Überspannung bereitzustellen. Die erfindungsgemäße Schaltungsanordnung ist zum Begrenzen eines Spannungswerts einer elektrischen Spannung (U) auf einen Schwellenwert ausgelegt. Sie umfasst zwei elektrische Leitelemente (Z₁,Z₂), zwischen denen die elektrische Spannung (U) erzeugbar ist. Die beiden Leitelemente (Z₁,Z₂) sind über einen Schaltungszweig (12) miteinander verbunden, der eine Reihenschaltung aus zumindest zwei Schaltungselementen (V_{A},V_{B}) aufweist, die jeweils einen spannungsabhängigen Widerstandswert aufweisen. Ein Teil der Schaltungselemente (V_{B}), d.h. zumindest eines aber nicht alle, ist mittels zumindest eines Schalters (S_{B}) überbrückbar.

## Beschreibung

Die Erfindung betrifft eine Schaltungsanordnung, mit der ein Schutz davor bereitgestellt werden kann, dass eine elektrische Spannung zwischen zwei elektrischen Leitelementen über einen vorgegebenen Schwellenwert steigt.

Bei elektrischen Schaltungen, insbesondere solchen für leistungselektronische Anwendungsfälle, kann es vorkommen, dass eine Versorgungsspannung einen unregelmäßigen zeitlichen Verlauf aufweist und hierbei auch ein Spannungswert auftritt, der größer als ein kritischer Spannungswert ist, bei welchem ein Bauteil der Schaltung beschädigt werden kann.

Eine solche Überspannung kann beispielsweise dadurch verursacht werden, dass ein Stromfluss durch ein induktives Bauteil, z.B. eine Drossel, abrupt unterbrochen wird. Das Bauteil induziert dann eine Spannung, die sich der eigentlichen Versorgungsspannung additiv überlagert.

Hierzu ist üblich, die Leitelemente einer Spannungsversorgung, also z.B. Stromschienen, Leiterbahnen oder Drähte, über einen Varistor zu verbinden. Ein solches Schaltungselement weist einen variablen Widerstand auf, der mit steigender Spannung zwischen den Leitungen ab einer bestimmten Schwellenspannung einen immer kleiner werdenden Widerstand aufweist. Dies verhindert, dass die Spannung wesentlich über die Schwellenspannung ansteigt.

Problematisch ist hierbei, dass bei dem Varistor der Wert für die Schwellenspannung in Abhängigkeit von zwei Randbedingungen gewählt werden muss. Er muss einerseits niedrig genug sein, um einen wirksamen Schutz für alle an die Leitungen angeschlossenen Verbraucher zu bieten. Andererseits darf der Wert nicht zu niedrig gewählt sein, da ansonsten auch schon unbedeutende Unregelmäßigkeiten im Spannungsverlauf zu einem unnötigen Durchbruch des Varistors führen würden. Der Spannungsschutz wäre dann wenig robust. Somit ist der gewählte Wert oftmals kein Optimum für einen der beiden Fälle (Schutz der Verbraucher bzw. Robustheit gegen Spannungsschwankungen), sondern nur ein Kompromiss, der beiden Ansprüchen in suboptimaler Weise gerecht wird.

Es ist Aufgabe der vorliegenden Erfindung, für eine elektrische Schaltung einen robusten und dennoch zuverlässigen Schutz vor einer Überspannung bereitzustellen.

Die Aufgabe wird durch eine Schaltungsanordnung gemäß Patentanspruch 1 und ein Verfahren gemäß Patentanspruch 8 gelöst. Vorteilhafte Weiterbildungen der erfindungsgemäßen Schaltungsanordnung und des erfindungsgemäßen Verfahrens sind durch die Unteransprüche gegeben.

Die erfindungsgemäße Schaltungsanordnung ist zum Begrenzen eines Spannungswerts einer elektrischen Spannung auf einen Schwellenwert ausgelegt. Sie umfasst zwei elektrische Leitelemente, zwischen denen die elektrische Spannung erzeugbar ist, also z.B. zwei Versorgungsleitungen einer Schaltung zum Bereitstellen einer Versorgungsspannung. Die beiden Leitelemente sind über einen Schaltungszweig miteinander verbunden, der eine Reihenschaltung aus zumindest zwei Schaltungselementen aufweist, die jeweils einen spannungsabhängigen Widerstandswert aufweisen. Dies können z.B. zwei Varistoren sein. Ein Teil der Schaltungselemente, d.h. zumindest eines davon aber eben nicht alle, ist mittels eines Schalters überbrückbar.

Die erfindungsgemäße Schaltungsanordnung weist den Vorteil auf, dass der Schwellenwert für den Überspannungsschutz einstellbar ist. Hierzu ergibt sich das erfindungsgemäße Verfahren, gemäß welchem durch Öffnen des Schalters ein erster Schwellenwert eingestellt wird und durch Schließen des Schalters ein zweiter Schwellenwert, der kleiner als der erste Schwellenwert ist.

Durch Einstellen des höheren Schwellenwerts kann die Schaltungsanordnung robust gegen Spannungsschwankungen gemacht werden, durch die Spannungswerte verursacht werden, die zwar über einer Nennspannung liegen, die aber unkritisch für die Verbraucher sind. Durch Senken des Schwellenwerts kann sichergestellt werden, dass ein Durchbruch in dem Schaltungszweig schnell genug und zuverlässig erfolgt, bevor ein Verbraucher beschädigt wird. Die beiden Schwellenwerte können dabei in optimaler Weise an die jeweiligen Fälle angepasst sein. Der Schwellenwert kann z.B. immer dann gezielt gesenkt werden, wenn zu erwarten ist, dass beispielsweise während eines Schaltvorgangs eine Überspannung durch eine Drossel induziert wird.

Schaltungselemente mit spannungsabhängigem Widerstand sind beispielsweise durch Varistoren oder Zenerdioden gegeben. Diese müssen bei der erfindungsgemäßen Schaltungsanordnung nicht besonders genau gefertigt sein, so dass sehr kostengünstige Typen verwendet werden können. Indem der Schwellenwert besonders niedrig eingestellt werden kann, erfolgt die Spannungsbegrenzung auch dann zuverlässig, wenn als Schaltungselemente Varistoren verwendet werden, deren tatsächliche Schwellenspannungen größer sind als angegeben. Dies kann bei besonders kostengünstigen Varistoren vorkommen, die mit größeren Toleranzen hergestellt werden. Durch Überbrücken eines Teils der Schaltungselemente kann jederzeit sichergestellt werden, dass in dem Schaltungszweig ein Durchbruch oberhalb eines bestimmten Schwellenwertes sicher erfolgt.

Ein Schaltungselement der genannten Art muss nicht als separates spannungsabhängiges Bauteil oder spannungsabhängiges Bauelement bereitgestellt sein. Es kann eine Anordnung von Halbleiterschichten in einer Halbleiter-Schaltungsanordnung sein.

Vorzugsweise ist der Schalter in dem Schaltungszweig mittels eines elektrischen Steuersignals steuerbar. Dann lässt sich das Einstellen des Schwellenwerts mit weiteren Steuerprozessen synchronisieren.

Ein weiterer Vorteil ergibt sich, wenn der Schalter ein elektronischer oder elektromechanischer Schalter ist. Ein elektronischer Schalter weist kurze Ansprech- und Schaltzeiten auf, so dass besonders schnell auf eine Zustandsänderung in der zu schützenden Schaltung, z.B. auf einen Kurzschluss, reagiert werden kann. Ein elektromechanischer Schalter ist über ein Steuersignal steuerbar und kann zugleich große Leistungen durch mechanische Teile schalten.

Der Schaltungszweig kann auch mehrere Schalter und/oder Schaltelemente aufweisen. Durch die weiteren Schalter kann dann jeweils ein weiterer Teil der Schaltungselemente überbrückbar sein. Dies ergibt den Vorteil, dass sich zwischen mehr als zwei Schwellenwerten umschalten lässt.

In einer besonders vorteilhaften Ausführungsform weist die erfindungsgemäße Schaltungsanordnung eine weitere Schalteinrichtung auf, durch welche ein Stromfluss in einem der Leitelemente unterbrechbar ist. Ebenfalls bereitgestellt ist dann eine Steuereinrichtung, die dazu ausgelegt ist, den Schalter in dem Schaltungszweig in Abhängigkeit von einem Schaltzustand der Schalteinrichtung zuschalten. Das erfindungsgemäße Verfahren wird entsprechend weitergebildet, indem der Schwellenwert für den Überspannungsschutz in dem Schaltungszweig durch Schließen des Schalters gesenkt wird, falls die Schalteinrichtung in einen sperrenden Zustand geschaltet wird.

Die Schaltungsanordnung ist auch für mehrphasige Systeme geeignet, also z.B. für ein Drehstromsystem, in dem zwischen drei Leitelementen Spannungen anliegen. Ein zuverlässiger Überspannungsschutz für ein dreiphasiges System ergibt sich, wenn insgesamt drei Schaltungszweige mit überbrückbaren, spannungsabhängigen Widerstandselementen bereitgestellt sind. Diese können dann entweder zu einer Stern- oder zu einer Dreiecksschaltung miteinander verschaltet sein und hierbei die drei Leitelemente, d.h. also z.B. die Netzphasen- oder Außenleiter eines Drehstromsystems, miteinander koppeln. Im Falle einer Sternschaltung sind die Schaltungszweige dabei jeweils einerseits mit einem gemeinsamen Sternpunkt und andererseits mit jeweils einem der Leitelemente verbunden. Insgesamt sind so alle drei Leitelemente mit dem Sternpunkt über jeweils einen der Schaltungszweige gekoppelt. Das Schalten der einzelnen Schalter in jedem der Schaltungszweige kann dann in der beschriebenen Weise erfolgen. Im Falle einer Dreiecksschaltung verbindet jeder Schaltungszweig jeweils zwei der Leitelemente.

Die Erfindung wird im Folgenden anhand von Ausführungsbeispielen näher erläutert. Dazu zeigt:
- FIG 1: eine schematische Darstellung einer Schutzschaltung gemäß einer Ausführungsform der erfindungsgemäßen Schaltungsanordnung,
- FIG 2: eine schematische Darstellung einer dreiphasigen Schutzschaltung gemäß einer weiteren Ausführungs-form der erfindungsgemäßen Schaltungsanordnung und
- FIG 3: eine schematische Darstellung einer anderen drei-phasigen Schutzschaltung gemäß einer weiteren Aus-führungsform der erfindungsgemäßen Schaltungsanord-nung und
- FIG 4: eine schematische Darstellung eines Frequenzumrich-ters, der eine Schutzschaltung gemäß einer Ausfüh-rungsform der erfindungsgemäßen Schaltungsanordnung aufweist.

Die Beispiele stellen bevorzugte Ausführungsformen der Erfindung dar.

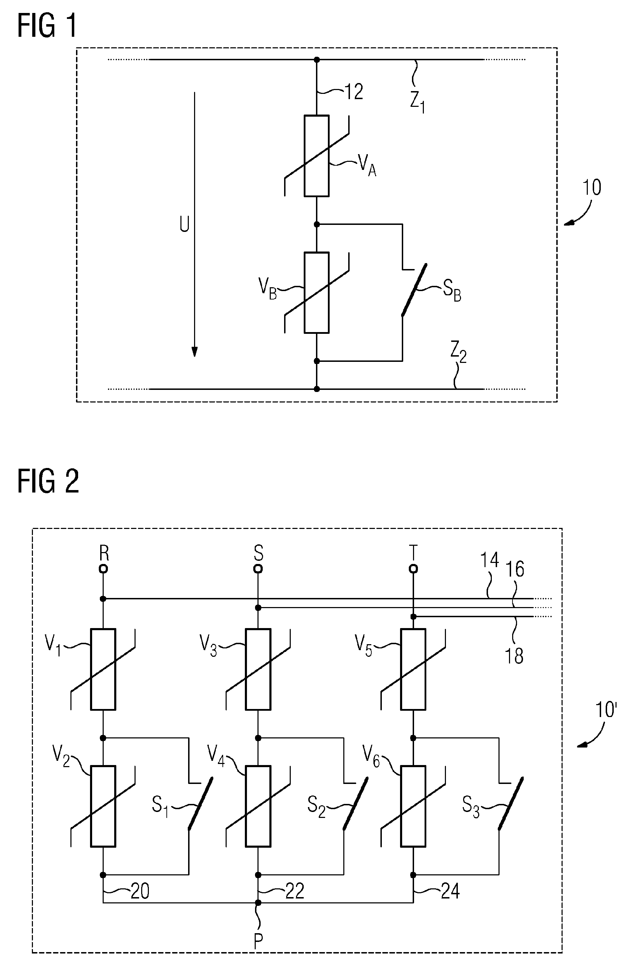

In FIG 1 ist eine Schutzschaltung 10 gezeigt, mit der ein Betrag einer Spannung U auf einen vorgebbaren Höchstwert begrenzt werden kann. Die Spannung U fällt zwischen zwei Versorgungsleitungen Z₁, Z₂ ab, an die (nicht dargestellte) elektrische Verbraucher eines nicht weiter dargestellten Geräts angeschlossen sind. Die Spannung U kann eine Gleichspannung, eine gleichgerichtete Spannung oder eine Wechselspannung sein. Im normalen Betrieb des Geräts weist die Spannung U einen Nennspannungswert auf.

Die beiden Versorgungsleitungen Z₁, Z₂ sind durch einen Schaltungszweig 12 miteinander verbunden. In dem Schaltungszweig 12 sind zwei Varistoren V_{A}, V_{B} zu einer Reihenschaltung miteinander verschaltet. Ein Schalter S_{B} ist dem Varistor V_{B} parallel geschaltet. Durch Schließen des Schalters S_{B} kann der Varistor V_{B} überbrückt werden. Der Schalter S_{B} kann beispielsweise ein elektronischer Schalter (z.B. ein Transistor) oder ein elektromechanischer Schalter (z.B. ein Relais oder ein Schütz) sein.

In geöffnetem Zustand des Schalters S_{B} fällt die Spannung U über der Reihenschaltung aus den beiden Varistoren V_{A}, V_{B} ab. Damit es zu einem Durchbruch beider Varistoren V_{A}, V_{B} kommt, d.h. damit diese beiden elektrisch leitend werden, muss ein Betrag der Spannung U größer als die Summe der Schwellenspannungen der beiden Varistoren V_{A}, V_{B} sein.

Bei geschlossenem Schalter S_{B} fällt die Spannung U vollständig über dem Varistor V_{A} ab. Damit kommt es bereits dann zu einem Durchbruch, wenn der Betrag der Spannung U größer als dessen Schwellenspannung ist.

Die beiden in Reihe geschalteten Varistoren V_{A}, V_{B} sind so ausgelegt, dass sie im Normalbetrieb des Geräts auch dann nicht leitend werden, wenn der Betrag der Spannung U auf einen Wert steigt, der zwar größer als der Nennspannungswert ist, bei dem aber keiner der Verbraucher in seiner Funktionstüchtigkeit beeinträchtigt wird. Somit ist die Schutzschaltung robust gegen unbedeutende Schwankungen im Verlauf der Spannung U. Um die Empfindlichkeit der Schutzschaltung zu erhöhen und zugleich ihre Ansprechzeit zu verkürzen, kann der Schalter S_{B} geschlossen werden. Dann ergibt sich bereits ein Durchbruch, wenn die Spannung U einen Wert aufweist, der nur geringfügig über dem Nennspannungswert liegt.

In FIG 2 sind drei Stromschienen 14, 16, 18 gezeigt, die zu einem (nicht dargestellten) Verbraucher führen. Die Stromschienen 14, 16, 18 weisen Anschlüsse auf, über welche sie mit Netzphasenleitern R, S, T eines Drehstrom-Versorgungsnetzes verbunden sind. Zwischen den Stromschienen 14, 16, 18 liegen somit die einzelnen Phasenspannungen des Versorgungsnetzes an.

Die Stromschiene 14 ist über einen Schaltungszweig 20 mit einem Sternpunkt P verbunden. Entsprechend sind die Stromschienen 16 und 18 über jeweilige Schaltungszweige 22 bzw. 24 mit dem Sternpunkt P verbunden.

In dem Schaltungszweig 20 bilden ein Varistor V₁ und V₂ eine Reihenschaltung. Der Varistor V₂ ist über einen Schalter S₁ überbrückbar. Entsprechendes gilt für den Schaltungszweig 22 mit Varistoren V₃ und V₄ und mit einem Schalter S₂ sowie für den Schaltungszweig 24 mit Varistoren V₅ und V₆ und mit einem Schalter S₃. Der Sternpunkt P kann auch mit einem Erdleiter verbunden sein. Insgesamt bildet die in FIG 2 dargestellte Schaltungsanordnung eine Schutzschaltung 10' für den Verbraucher.

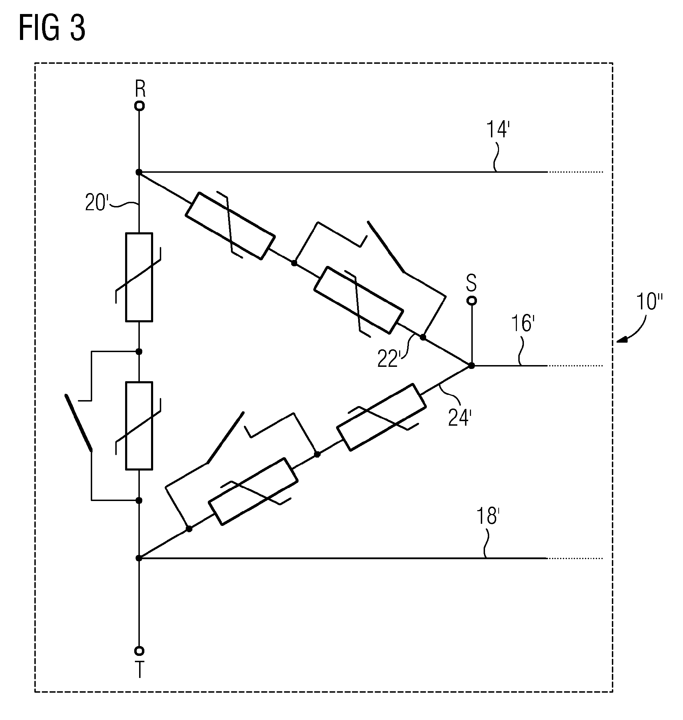

In FIG 3 ist eine Schutzschaltung 10" gezeigt, bei der drei Stromschienen 14', 16', 18' über eine Sternschaltung miteinander verbunden sind. Elemente der Schutzschaltung 10'', die in ihrer Funktionsweise Elementen in FIG 2 entsprechen, weisen als Bezugszeichen gestrichene Bezugszeichen derjenigen Elemente auf, denen sie entsprechen. Die Stromschienen 14', 16', 18' weisen Anschlüsse auf, über welche sie mit Netzphasenleitern R, S, T eines Drehstrom-Versorgungsnetzes verbunden sind.

Die Sternschaltung 10" ist aus Schaltungszweigen 20', 22', 24' gebildet. In den Schaltungszweigen 20', 22', 24' bilden jeweils zwei Varistoren eine Reihenschaltung. Einer davon ist über einen Schalter überbrückbar.

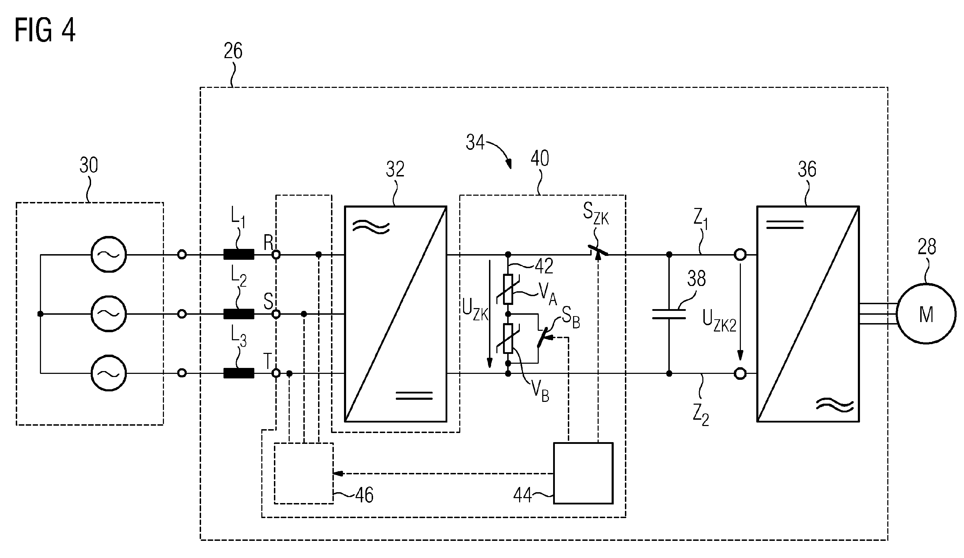

In FIG 4 ist ein Frequenzumrichter 26 gezeigt, über den eine elektrische Maschine 28 an einem dreiphasigen Versorgungsnetz 30 betrieben wird. In dem Frequenzumrichter 26 erzeugt ein Gleichrichter 32 aus Netzwechselspannungen, die zwischen Netzphasenleitern R, S, T des Versorgungsnetzes 30 anliegen, in einem Zwischenkreis 34 eine gleichgerichtete Spannung U_{ZK}. Ein Wechselrichter 36 erzeugt aus einer gleichgerichteten Spannung U_{ZK2} des Zwischenkreises 36 eine Wechselspannung zum Betreiben der elektrischen Maschine 28.

Dem Gleichrichter 32 sind netzseitig Kommutierungsdrosseln L₁, L₂, L₃ vorgeschaltet. Durch diese wird in einem Hochsetzstellerbetrieb des Gleichrichters 32 ein Kommutierungsstrom in seiner Stromstärke begrenzt.

In dem Zwischenkreis 34 wird die gleichgerichtete Spannung U_{ZK2} durch einen Zwischenkreiskondensator 38 geglättet. Eine Kapazität des Zwischenkreiskondensators 38 kann größer als 1 mF sein.

In dem Zwischenkreis 34 kann ein Strom, der von dem Gleichrichter 32 hin zu dem Zwischenkreiskondensator 38 und dem Wechselrichter 36 fließt, durch einen Zwischenkreisschalter S_{ZK} unterbrochen werden. Der Zwischenkreisschalter S_{ZK} kann z. B. ein SiC-MOSFET (SiC - Siliziumcarbid; MOS - Metall-Oxid-Halbleiter; FET - Feldeffekttransistor) oder ein SiC-JFET (JFET - Sperrschicht-FET, Junction-FET) oder ein auf Silizium basierender Transistor (Si-Transistor; Si - Silizium) oder eine Kaskodenschaltung mit einem MOSFET und einem JFET sein.

Der Zwischenkreisschalter S_{ZK} ist Bestandteil einer Schutzschaltung 40. Die Schutzschaltung 40 ist eine Ausführungsform der erfindungsgemäßen Schaltungsanordnung. Zu der Schutzschaltung 40 gehört auch ein Schaltungszweig 42, der eine Plus-Potiential-Stromschiene, die eine erste Versorgungsleitung Z₁ des Zwischenkreises bildet, mit einer Minus-Potiential-Stromschiene, die eine zweite Versorgungsleitung Z₂ des Zwischenkreises 34 bildet, verbindet. Der Schaltungszweig 42 ist in vergleichbarer Weise ausgestaltet wie der Schaltungszweig 12. In FIG 4 sind deshalb für Elemente des Schaltungszweigs 42, die Elementen des Schaltungszweiges 12 entsprechen, gleiche Bezugszeichen verwendet wie in FIG 1. Varistoren V_{A} und V_{B} des Schaltungszweiges 42 weisen Werte für Schwellenspannungen auf, deren Summe einem Normwert entspricht, wie er für einen Überspannungsschutz in einem Zwischenkreis des gezeigten Typs vorgeschrieben ist.

Ein Steuereingang des Zwischenkreisschalters S_{ZK} und ein Steuereingang eines Schalters S_{B} des Schaltungszweigs 42 sind mit einer Steuereinrichtung 44 verbunden. Die Steuereinrichtung 44 überwacht eine Stromstärke eines durch den Frequenzumrichter 26 fließenden Stroms und schaltet die Schalter S_{ZK} und S_{B} in Abhängigkeit von der gemessenen Stromstärke.

Falls es zu einem Kurzschluss in dem Zwischenkreis 34, im Wechselrichter 36 oder in der elektrischen Maschine 28 kommt und deshalb ein Kurzschlussstrom mit großer Stromstärke aus dem Netz 30 durch den Gleichrichter 32 in den Zwischenkreis 34 fließt, kann dies dazu führen, dass Bauteile des Gleichrichters 32 beschädigt werden. Deshalb erzeugt die Steuereinrichtung 44 ein Steuersignal am Steuereingang des Zwischenkreisschalters S_{ZK}, durch welches dieser in einen sperrenden Zustand geschaltet wird, falls die von der Steuereinrichtung 44 überwachte Stromstärke größer als ein vorbestimmter Wert ist. Durch ein zweites Steuersignal wird der Schalter S_{B} geschlossen. Hierdurch sinkt der Wert für die Schwellenspannung auf den Wert der Schwellenspannung des Varistors V_{A}. Aufgrund der Unterbrechung des Stromes durch Öffen des Schalters S_{ZK}, erzeugen die Kommutierungsdrosseln L₁, L₂, L₃ eine Induktionsspannung, die einen Durchbruch im Varistor V_{A} verursacht. Hierdurch sinkt der Betrag der Spannung U_{ZK} auf einen Spannungswert, der so gering ist, dass weder der Gleichrichter 32 noch der Schalter S_{ZK} beschädigt werden.

Mittels einer (nicht dargestellten) Schalteinrichtung ist es auch möglich, zu einem beliebigen Zeitpunkt ein Steuersignal zum Öffnen des Zwischenkreisschalters S_{ZK} an dessen Steuereingang zu erzeugen.

Die Schutzschaltung 40 kann auch eine Sternschaltung 46 aus Schaltungszweigen umfassen, deren Aufbau demjenigen der in FIG 2 gezeigten Sternschaltung der Schutzschaltung 10' entsprechen kann. Dann sind entsprechend auch Schalter der Sternschaltung 46 durch die Steuereinrichtung 44 ansteuerbar. Die Sternschaltung 46 kann zusätzlich zum Schaltungszweig 42 oder anstelle desselben bereitgestellt sein. Anstelle der Sternschaltung 46 kann die Schutzschaltung 40 auch eine Dreieckschaltung wie z.B. die in FIG 3 gezeigte Dreieckschaltung der Schutzschaltung 10" aufweisen.

Durch die Beispiele ist gezeigt, wie ein Schwellenwert einer Schutzschaltung für unterschiedliche Betriebsfälle angepasst werden kann. Falls es für einen bestimmten Betriebsfall nötig ist, kann die Empfindlichkeit des Überspannungsschutzes erhöht werden. Andererseits kann sichergestellt werden, dass der Überspannungsschutz beispielsweise im normalen Betrieb unbeabsichtigt anspricht. Es werden hier die Synergien zweier Bauteile genutzt, wodurch sich zwei Funktionalitäten ergeben: ein robuster Überspannungsschutz im Normalbetrieb und eine Spannungsbegrenzung, wie es z.B. bei einem Zwischenkreis eines Frequenzumrichters nötig ist, wenn dieser (durch Öffnen des Schalters S_{ZK}) abgeschaltet wird, während in dem Zwischenkreis noch ein großer Strom fließt.

Die erfindungsgemäße Schaltungsanordnung kann, wie gezeigt, in einem Frequenzumrichter verwendet werden. Dieser kann dann mit einem abschaltbaren Zwischenkreis bereitgestellt werden. Die erfindungsgemäße Schaltungsanordnung ist aber auch für andere leistungselektronische Schaltungen geeignet. Durch eine geeignete Wahl von Bauelementen mit einem spannungsabhängigen Widerstandswert und von Schaltern zum Überbrücken kann daneben auch ein Überspannungsschutz für andere Typen von Schaltungen bereitgestellt werden. Es sind auch mehrere Schaltstufen durch weitere überbrückbare Bauelemente mit spannungsabhängigem Widerstandswert möglich.

## Patentansprüche

1. Schaltungsanordnung (10,10',10'',40) zum Begrenzen eines Spannungswertes einer elektrischen Spannung (U, U_{ZK}) auf einen einstellbaren Schwellenwert, umfassend
zwei elektrische Leitelemente (14,16,18,14',16',18', Z₁,Z₂), zwischen denen die elektrische Spannung (U, U_{ZK}) erzeugbar ist, und
einen Schaltungszweig (12,20,22,24,20',22',24',42), über welchen die beiden Leitelemente (14,16,18,14',16',18', Z₁,Z₂) miteinander verbunden sind und welcher eine Reihenschaltung aus zumindest zwei Schaltungselementen (V_{A},V_{B},V₁ bis V₆) aufweist, die jeweils einen spannungsabhängigen Widerstandswert aufweisen und von denen ein Teil (V_{B},V₂,V₄,V₆) mittels eines Schalters (S_{B},S₁,S₂,S₃) überbrückbar ist.

2. Schaltungsanordnung (10,10',10'',40) nach Anspruch 1,
**dadurch gekennzeichnet, dass** zumindest eines der Schaltungselemente (V_{A},V_{B},V₁ bis V₆) einen Varistor (V_{A},V_{B},V₁ bis V₆) oder eine Zenerdiode umfasst.

3. Schaltungsanordnung (10,10',10" ,40) nach Anspruch 1 oder 2, **dadurch gekennzeichnet, dass** der Schalter (S_{B},S₁,S₂,S₃) mittels eines elektrischen Steuersignals steuerbarer ist.

4. Schaltungsanordnung (10,10',10'',40) nach einem der vorhergehenden Ansprüche, **dadurch gekennzeichnet, dass** der Schalter (S_{B},S₁,S₂,S₃) ein elektronischer oder elektromechanischer Schalter ist.

5. Schaltungsanordnung (40) nach einem der vorhergehenden Ansprüche, **gekennzeichnet durch** eine Schalteinrichtung (S_{ZK}), **durch** welche ein Stromfluss in einem der Leitelemente (Z₁) unterbrechbar ist, und eine Steuereinrichtung (44), welche dazu ausgelegt ist, den Schalter (S_{B}) in dem Schaltungszweig (42) in Abhängigkeit von einem Schaltzustand der Schalteinrichtung (S_{ZK}) zu schalten.

6. Schaltungsanordnung nach einem der vorhergehenden Ansprüche, **dadurch gekennzeichnet, dass** der Schaltungszweig zumindest einen weiteren Schalter aufweist, durch den ein weiterer Teil der Schaltungselemente überbrückbar ist.

7. Schaltungsanordnung nach einem der vorhergehenden Ansprüche, **gekennzeichnet durch** ein drittes elektrisches Leitelement (18,18') und insgesamt drei Schaltungszweige (20,22,24,20',22',24') der genannten Art, die in einer Sternschaltung (10') oder einer Dreiecksschaltung (10") miteinander verschaltet sind und über die die drei Leitelemente (14,16,18,14',16',18') miteinander gekoppelt sind.

8. Verfahren zum Betreiben einer Schaltungsanordnung (10, 10',10'',40) gemäß einem der vorhergehenden Ansprüche, umfassend die Schritte:
- Öffnen des Schalters (S_{B},S₁,S₂,S₃) eines Schaltungszweiges (12,20,22,24,20',22',24',42) und hierdurch Einstellen eines ersten Schwellenwerts;
- Schließen des Schalters (S_{B},S₁,S₂,S₃) und hierdurch Einstellen eines zweiten Schwellenwerts, der kleiner als der erste Schwellenwert ist.

9. Verfahren nach Anspruch 8 zum Betreiben einer Schaltungsanordnung (40) gemäß Anspruch 6 oder gemäß Anspruch 7 in Rückbezug auf Anspruch 6,
bei welchem der Schwellenwert in zumindest einem Schaltungszweig (42) durch Schließen des zugehörigen Schalters (S_{B}) gesenkt wird, falls die Schalteinrichtung (S_{ZK}) in einen sperrenden Zustand geschaltet wird.
